(19) Europäisches Patentamt
European Patent Office
Office européen des brevets

(11) **EP 4 166 911 B1**

(12) **FASCICULE DE BREVET EUROPEEN**

(45) Date de publication et mention
de la délivrance du brevet:
**28.05.2025 Bulletin 2025/22**

(21) Numéro de dépôt: **22201360.9**

(22) Date de dépôt: **13.10.2022**

(51) Classification Internationale des Brevets (IPC):
*G01D 3/02* (2006.01)   *H02P 6/16* (2016.01)
*H02K 11/215* (2016.01)   *H02P 23/00* (2016.01)
*G01D 5/14* (2006.01)   *H02P 25/022* (2016.01)

(52) Classification Coopérative des Brevets (CPC):
**H02K 11/215; G01D 3/022; H02P 6/16;
H02P 23/0031;** G01D 5/145; H02P 25/022

(54) **PROCEDE ET DISPOSITIF DE CORRECTION DE MESURES EFFECTUEES PAR UN CAPTEUR D'UN CHAMP MAGNETIQUE D'UN AIMANT DISPOSE SUR UN ARBRE D'UN MOTEUR POUR LE CONTROLE DU MOTEUR**

VERFAHREN UND VORRICHTUNG ZUR KORREKTUR VON MESSUNGEN EINES MAGNETFELDSENSORS EINES AUF EINER MOTORWELLE ANGEORDNETEN MAGNETEN ZUR MOTORSTEUERUNG

METHOD AND DEVICE FOR CORRECTING MEASUREMENTS MADE BY A MAGNETIC FIELD SENSOR OF A MAGNET ARRANGED ON A SHAFT OF A MOTOR FOR MOTOR CONTROL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.10.2021 FR 2110928**

(43) Date de publication de la demande:
**19.04.2023 Bulletin 2023/16**

(73) Titulaire: **Delta Dore
35270 Bonnemain (FR)**

(72) Inventeur: **PIHUIT, Jean-Philippe
35270 Bonnemain (FR)**

(74) Mandataire: **Cabinet Le Guen Maillet
3, impasse de la Vigie
CS 71840
35418 Saint-Malo Cedex (FR)**

(56) Documents cités:
**EP-A1- 2 629 415    JP-A- 2011 217 584
US-B1- 6 396 229**

**Description**

DOMAINE TECHNIQUE

La présente invention concerne un procédé et un dispositif de correction de mesures effectuées par un capteur d'un champ magnétique d'un aimant disposé sur un arbre d'un moteur pour le contrôle du moteur.

ETAT DE LA TECHNIQUE ANTERIEURE

L'utilisation de moteurs alimentés par batterie est devenue courante aujourd'hui. Les moteurs à courant continu sans balais (BLDC) en font partie.

Un moteur BLDC typique est constitué d'un stator comprenant une série d'enroulements, par exemple trois, qui forment trois phases, et d'un rotor comprenant une série d'aimants, par exemple une série d'aimants comprenant six pôles, qui interagissent magnétiquement avec les enroulements du stator. Lorsque les phases des enroulements sont alimentées séquentiellement, elles provoquent la rotation du rotor. Les moteurs BLDC génèrent plus de puissance et sont plus efficaces que les moteurs à courant continu à balais conventionnels de taille similaire et les moteurs universels. Les moteurs BLDC sont commutés électroniquement, ce qui nécessite un contrôleur pour commuter les phases appropriées du moteur en fonction de la position angulaire du rotor.

Les moteurs BLDC sont généralement entraînés à l'aide d'un schéma de contrôle trapézoïdal, également appelé contrôle de commutation, où un tour du moteur est divisé en secteurs angulaires de degrés définis qui sont alimentés séquentiellement pour provoquer la rotation du rotor. Dans une mise en œuvre, chaque phase du moteur est alimentée pour un angle défini, par exemple, un tour de moteur est divisé en 18 combinaisons de 20 degrés chacune et un secteur comporte 6 combinaisons dans une configuration de moteur triphasé. Les 6 combinaisons sont répétées pour chaque secteur.

Classiquement, le moteur est pourvu d'une série de capteurs à effet Hall qui détectent un champ magnétique du rotor et fournissent des signaux au contrôleur indiquant la position du rotor.

Le positionnement du ou des capteurs vis-à-vis de la source du champ magnétique influe significativement sur la qualité de la mesure de la position du rotor. Il est alors nécessaire d'effectuer un positionnement du ou des capteurs vis-à-vis de la source du champ magnétique qui nécessite une intervention humaine.

La présente invention vise à s'affranchir de toute intervention humaine pour le positionnement du ou des capteurs vis-à-vis de la source du champ magnétique tout en garantissant une précision dans la mesure de la position du rotor.

EXPOSE DE L'INVENTION

A cette fin, selon un premier aspect, l'invention propose un procédé de correction de mesures effectuées par un capteur d'un champ magnétique d'un aimant disposé sur un arbre d'un moteur pour le contrôle du moteur, le moteur étant un moteur à courant continu sans balais comprenant un rotor et un stator, le capteur de champ magnétique permettant l'obtention de valeurs d'angles pendant la rotation du moteur, un tour stator étant divisé en secteurs, chaque secteur comprenant plusieurs combinaisons de commandes de bobines du stator, caractérisé en ce que le procédé comporte les étapes, exécutées par un contrôleur du moteur de :

- mise en rotation du rotor en créant un champ tournant dans le stator sans connaître la position du rotor,
- obtention de valeurs d'angles dits normalisés à partir du capteur de champ magnétique, les valeurs d'angles normalisés étant obtenues pendant un tour complet du rotor,
- calcul de correctifs de linéarisation des angles normalisés obtenus,
- obtention, pour chaque secteur, d'une position angulaire du rotor pour une combinaison donnée du secteur,
- détermination d'une moyenne angulaire à partir des positions angulaires obtenues pour obtenir un écart angulaire entre le capteur de champ magnétique et l'aimant disposé sur ledit arbre moteur,
- mise en rotation du rotor en utilisant l'écart angulaire entre le capteur de champ magnétique et l'aimant disposé sur ledit arbre moteur,
- variation de l'écart angulaire et mesure, pour chaque variation, du courant consommé par le moteur,
- sélection de la variation qui correspond au courant minimum consommé par le moteur comme la valeur de l'écart angulaire.

L'invention concerne aussi un dispositif de correction de mesures effectuées par un capteur d'un champ magnétique d'un aimant disposé sur un arbre d'un moteur pour le contrôle du moteur, le moteur étant un moteur à courant continu sans balais comprenant un rotor et un stator, le capteur de champ magnétique permettant l'obtention de valeurs d'angles pendant la rotation du moteur, un tour stator étant divisé en secteurs, chaque secteur comprenant plusieurs combinaisons de commandes de bobines du stator, caractérisé en ce que le dispositif prévu pour être compris dans un contrôleur du moteur et comporte :

- des moyens de mise en rotation du rotor en créant un champ tournant dans le stator sans connaître la position du rotor,
- des moyens d'obtention de valeurs d'angles dits normalisés à partir du capteur de champ magnétique, les valeurs d'angles normalisés étant obtenues pendant un tour complet du rotor,

- des moyens de calcul de correctifs de linéarisation des angles normalisés obtenus,
- des moyens d'obtention, pour chaque secteur, d'une position angulaire du rotor pour une combinaison donnée du secteur,
- des moyens de détermination d'une moyenne angulaire à partir des positions angulaires obtenues pour obtenir un écart angulaire entre le capteur de champ magnétique et l'aimant disposé sur ledit arbre moteur,
- des moyens de mise en rotation du rotor en utilisant l'écart angulaire entre le capteur de champ magnétique et l'aimant disposé sur ledit arbre moteur,
- des moyens de variation de l'écart angulaire et mesure, pour chaque variation, du courant consommé par le moteur,
- des moyens de sélection de la variation qui correspond au courant minimum consommé par le moteur comme la valeur de l'écart angulaire.

Ainsi, la présente invention permet de s'affranchir de toute intervention humaine pour le positionnement du ou des capteurs vis-à-vis de la source du champ magnétique tout en garantissant une précision dans la mesure de la position du rotor.

Selon un mode particulier de l'invention, si le capteur est un capteur de champ magnétique analogique, les angles normalisés sont calculés à partir d'acquisitions d'un signal sinus et d'un signal cosinus, les acquisitions des signaux sinus et cosinus étant modifiées pour que les valeurs moyennes des acquisitions des signaux sinus et cosinus sont nulles et que l'amplitude de la variation des valeurs des acquisitions des signaux sinus et cosinus sont identiques.

Ainsi, le calcul du rapport sinus sur cosinus est cohérent.

Selon un mode particulier de l'invention, des valeurs d'angles normalisés sont obtenues pendant plus d'un tour complet du moteur et en ce que le procédé comporte entre outre l'étape de :

- sélection parmi les angles normalisés obtenus, des angles normalisés pendant un tour complet, la sélection des angles normalisé étant effectuée en sélectionnant les angles normalisés compris entre un premier angle normalisé qui a une différence d'angle au moins supérieure à 50° avec le précédent angle normalisé et un angle normalisé qui a une différence d'angle de plus de 50° avec l'angle normalisé précédent, les angles normalisés sélectionnés étant mémorisés dans une table d'angles normalisés.

Ainsi, la présente invention garantit que seuls les angles normalisés acquis pendant un même tour du moteur sont traités.

Selon un mode particulier de l'invention, le nombre d'angles normalisés sélectionnés est inférieur à 360 et en ce que le procédé comporte en outre les étapes :

- calcul, pour chaque angle normalisé sélectionné, d'un angle théorique correspondant à l'angle normalisé en considérant que le premier angle normalisé sélectionné a un angle théorique de 0° et le dernier angle normalisé sélectionné a un angle de 360°.
- initialisation d'une table de correctifs comportant une valeur de correctif pour chaque degré d'un tour du moteur, chaque valeur de correctif étant initialisée à une valeur prédéterminée qui correspond à une valeur qui ne peut correspondre à une valeur calculée d'un correctif,
- calcul, pour chaque angle normalisé sélectionné, d'un correctif qui est égal à l'angle théorique calculé pour l'angle normalisé sélectionné moins la valeur de l'angle normalisé,
- mémorisation du correctif calculé dans la table des correctifs à la position qui correspond à la valeur de l'angle normalisé sélectionné,
- parcours de la table de correctifs pour identifier chaque correctif dont la valeur est différente de la valeur prédéterminée,
- mémorisation d'une valeur de correctif pour chaque correctif dont la valeur est égale à la valeur prédéterminée, la valeur de correctif mémorisée étant déterminée à partir d'une progression linéaire entre deux correctifs dont la valeur est différente de la valeur prédéterminée.

Ainsi, la table des correctifs comporte une correction par degré pour un tour complet du moteur.

Selon un mode particulier de l'invention, le procédé comporte en outre les étapes de :

- identification de correctifs singuliers dans la table de correctifs, un point singulier ayant une valeur de correctif qui est différente de +/- 5° avec chaque valeur de correctif adjacent,
- remplacement de chaque valeur de correctif singulier par une moyenne des deux valeurs de correctifs adjacents au correctif singulier.

Ainsi, des éventuelles variations anormales des correctifs, liées par exemple à du bruit sont supprimées.

Selon un mode particulier de l'invention, la moyenne angulaire est déterminée à partir des positions angulaires obtenues en répartissant les positions angulaires autour de 0.

Ainsi, le calcul de la moyenne est valide.

Selon un mode particulier de l'invention, la répartition des positions angulaires autour de 0 est effectuée en vérifiant si une position angulaire est supérieure à un seuil de décision et les autres positions angulaires sont inférieures au seuil de décision ou si une position angulaire est inférieure au seuil de décision et les autres positions angulaires sont supérieures au seuil de décision, et dans l'affirmative, en modifiant la valeur de chaque position angulaire en soustrayant la valeur de la plage d'angles couverte par un secteur à la valeur de la position angulaire.

Ainsi, le calcul de la moyenne est valide.

Selon un mode particulier de l'invention, la moyenne angulaire est en outre déterminée en :

- calculant la moyenne des positions angulaires,
- vérifiant si une des positions angulaires n'est pas comprise dans une plage de valeur autour de la moyenne et dans l'affirmative en calculant la moyenne des positions angulaires qui sont comprises dans une plage de valeur autour de la moyenne.

Ainsi, les valeurs entachées d'erreurs ne sont pas prises en compte.

Selon un mode particulier de l'invention, la mise en rotation du rotor en utilisant l'écart angulaire entre le capteur de champ magnétique et l'aimant disposé sur ledit arbre moteur pour connaître la position du rotor, la variation de l'écart angulaire et la mesure, pour chaque variation, du courant consommé par le moteur, et la sélection de la variation qui correspond au courant minimum consommé par le moteur comme la valeur de l'écart angulaire sont effectuées pour chaque sens de rotation du moteur.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement l'architecture d'un système comprenant un moteur et un dispositif de commande du moteur selon la présente invention ;
[Fig. 2] représente des courbes obtenues par un capteur mesurant un champ magnétique d'un aimant disposé à l'extrémité d'un arbre du moteur ;
[Fig. 3] illustre schématiquement un exemple d'architecture matérielle d'un dispositif de contrôle du moteur selon la présente invention ;
[Fig. 4] illustre schématiquement un procédé de linéarisation de mesures de champ magnétique de l'aimant disposé à l'extrémité de l'arbre du moteur ;
[Fig. 5] illustre schématiquement un procédé de calcul et d'application de corrections à appliquer pour la linéarisation de mesures de champ magnétique de l'aimant disposé à l'extrémité de l'arbre du moteur ;
[Fig. 6] illustre schématiquement un procédé de détermination d'un écart angulaire entre le capteur mesurant le champ magnétique et l'aimant disposé à l'extrémité de l'arbre du moteur ;

[Fig. 7] illustre schématiquement un procédé d'ajustement de la valeur de l'écart angulaire entre le capteur mesurant le champ magnétique et l'aimant disposé à l'extrémité de l'arbre du moteur ;
[Fig. 8a] et [Fig. 8b] illustrent schématiquement un procédé de calcul des correctifs de linéarisation selon la présente invention ;
[Fig. 9] illustre schématiquement un procédé de lissage de correctifs de linéarisation selon la présente invention ;
[Fig. 10] illustre schématiquement un procédé de capture de la valeur d'un angle correspondant au point déterminé d'alimentation de chaque secteur ;
[Fig. 11] illustre schématiquement un procédé de répartition de positions angulaires autour de 0 ;
[Fig. 12] illustre schématiquement un procédé de détermination d'une moyenne de positions angulaires.

EXPOSE DETAILLE DE MODES DE REALISATION

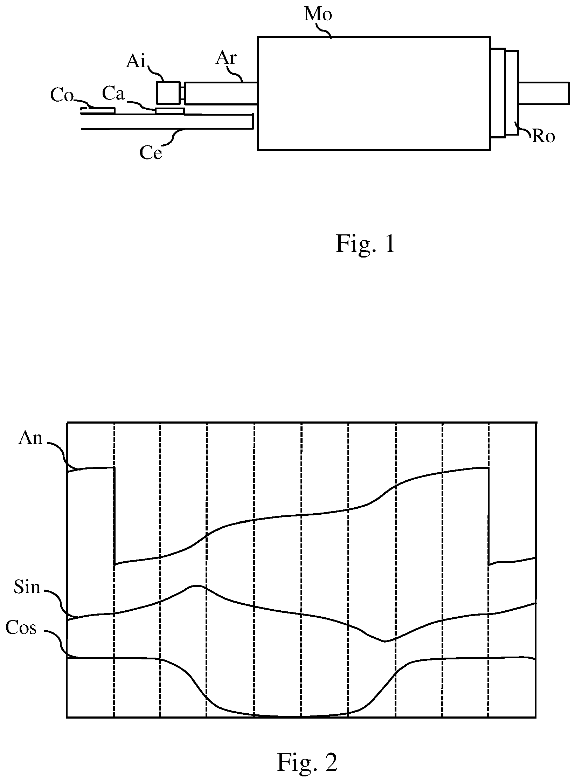

La **Fig. 1** illustre schématiquement l'architecture d'un système comprenant un moteur et un dispositif de commande du moteur selon la présente invention.

Le moteur Mo est un moteur BLDC qui comporte un rotor Ro comprenant un arbre Ar à l'extrémité duquel est disposé une source de champ magnétique telle qu'un aimant permanent Ai à deux pôles. Un capteur à effet hall Ca à au moins deux dimensions, dans l'exemple présent une dimension axiale et radiale, est disposé sur une carte électronique Ce qui comprend les composants électroniques nécessaires pour la commande du moteur. La carte électronique comporte en outre un dispositif de contrôle du moteur tel qu'un contrôleur Co qui implémente le procédé de correction de mesures effectuées par un capteur d'un champ magnétique de l'aimant Ai disposé sur un arbre d'un moteur pour le contrôle du moteur.

Le placement de la carte électronique Ce vis-à-vis de l'aimant Ai est effectué sans réglages, ajustements ce qui induit des erreurs pour la mesure de la position du rotor comme cela est décrit en référence à la Fig. 2.

La **Fig. 2** représente des courbes obtenues par un capteur mesurant un champ magnétique d'un aimant disposé à l'extrémité d'un arbre du moteur.

Le capteur Ca doit être en mesure de restituer les grandeurs nécessaires au calcul de la position angulaire de l'aimant Ai. Sachant que la position angulaire est égale à l'arc tangente du rapport de la valeur des champs magnétiques mesurés sur deux axes.

En théorie, le capteur Ca soumis au champ magnétique issu de la rotation de l'aimant Ai situé en bout d'arbre Ar restitue une sinusoïde sur chacun de ses deux axes, ces deux sinusoïdes sont de même amplitude et décalées de 90°, ce qui correspond à un sinus et un cosinus.

La valeur de la position angulaire est alors égale

$$\tan^{-1}(\frac{sin}{cos})$$
à .

Comme le montre la Fig. 2, la composante sinus et la composante cosinus ne sont pas sinusoïdales, n'ont pas la même amplitude et ne sont pas décalés exactement de 90°.

Par conséquent, le calcul de l'angle An réalisé dans ces conditions retourne une variation non linéaire pour une rotation de 360°.

Dans ces conditions, la mesure de la position angulaire est inexploitable car sa variation doit impérativement être linéaire sur 360°.

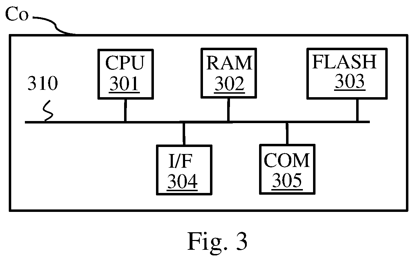

La **Fig. 3** illustre schématiquement un exemple d'architecture matérielle d'un dispositif de contrôle du moteur selon la présente invention.

Selon l'exemple d'architecture matérielle représenté à la Fig. 3, le dispositif de contrôle du moteur Co comprend alors, reliés par un bus de communication 310 : un processeur ou CPU (« Central Processing Unit » en anglais) 301 ; une mémoire vive RAM (« Random Access Memory » en anglais) 302 ; une mémoire non volatile ROM (« Read Only Memory » en anglais) 303 telle que par exemple une mémoire FLASH; une interface d'entrée 304 recevant le ou les signaux délivrés par le capteur Ca ; au moins une interface de communication permettant au dispositif de contrôle du moteur Co de recevoir des ordres de commandes du moteur Mo.

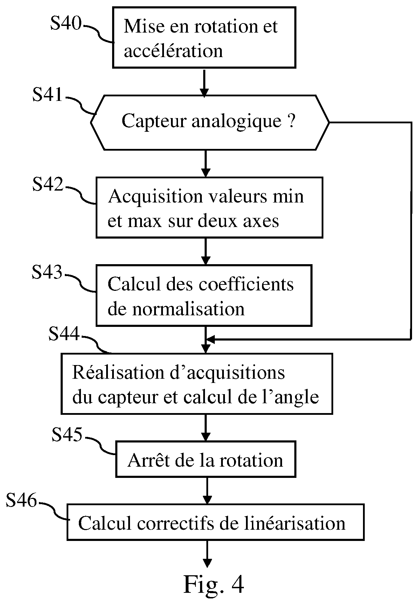

Le processeur 301 est capable d'exécuter des instructions chargées éventuellement dans la RAM 302 à partir de la ROM 303 ou d'une mémoire externe (non représentée). Lorsque le dispositif de contrôle du moteur Co est mis sous tension, le processeur 301 est capable de lire de la RAM 302 des instructions et de les exécuter. Ces instructions forment un programme d'ordinateur causant la mise en œuvre, par le processeur 301, de tout ou partie des procédés décrits en relation avec les Figs. 4 à 12.

Les procédés décrits ci-après en relation avec les Figs. 4 à 12 peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de contrôle du moteur Co comprend de la circuiterie électronique configurée pour mettre en œuvre les procédés décrits en relation avec les Figs. 4 à 12.

Les algorithmes des Figs. 4 à 12 sont exécutés en usine à la fin de l'assemblage du moteur Mo, par exemple en usine. Les corrections déterminées par les algorithmes tels que décrits en références aux Figs. 4 à 12 sont mémorisées dans la mémoire non volatile 303 et sont utilisées par le dispositif de contrôle du moteur Co pour déterminer la position du rotor lorsque le moteur est mis en fonctionnement. Le moteur Mo est par exemple un moteur destiné à commander l'ouverture, la fermeture d'un dispositif d'occultation tel qu'un volet roulant.

La **Fig. 4** illustre schématiquement un procédé de linéarisation de mesures de champ magnétique de l'aimant disposé à l'extrémité de l'arbre du moteur.

A l'étape S40, le dispositif de contrôle du moteur Co commande la mise en rotation et en accélération du moteur jusqu'à arriver à une vitesse donnée. La position angulaire du rotor n'est pas connue, un champ tournant est néanmoins créé dans le stator sans connaître la position du rotor. Du fait que le stator est piloté sans connaitre la position angulaire du rotor, la vitesse de rotation du rotor est réduite pour éviter une consommation de courant excessive.

Dans le cas d'une utilisation du moteur pour la commande de l'ouverture et la fermeture d'un dispositif d'occultation, un système de blocage du moteur est activé lorsque le moteur est à l'arrêt. Le blocage est par exemple réalisé avec une bague frein qui impose un couple résistant sur le rotor pour bloquer la rotation rotor.

A vitesse réduite, la bague frein provoque des à-coups de rotation, ce qui va perturber l'acquisition d'échantillons. Par exemple, la vitesse donnée est de 2200 tr/mn. Cette vitesse évite les à-coups de rotation. Il est à remarquer ici que la création du champ tournant dans le stator sans connaître la position du rotor nécessite un courant bien supérieur au courant nécessaire à une rotation du rotor lorsque la position du rotor est connue.

A l'étape suivante S41, le dispositif de contrôle du moteur Co vérifie si le capteur Ca utilisé est de type numérique ou analogique.

Si le capteur Ca est de type analogique, le dispositif de contrôle du moteur Co passe à l'étape S42. Dans la négative, le dispositif de contrôle du moteur Co passe à l'étape S44. A l'étape S42, le dispositif de contrôle du moteur Co détermine les valeurs minimale et maximale prises par le signal sinus et les valeurs minimale et maximale prises par le signal cosinus.

A l'étape S43, le dispositif de contrôle du moteur Co calcule des coefficients de normalisation à partir des valeurs minimales et maximales obtenues.

Par exemple, le dispositif de contrôle du moteur Co calcule, pour les acquisitions du signal sinus, un décalage ou offset sinus égal à la somme de la valeur maximale des acquisitions sinus et de la valeur minimale des acquisitions sinus divisée par deux. Le dispositif de contrôle du moteur Co calcule, pour les acquisitions du signal cosinus, un décalage cosinus égal à la somme de la valeur maximale des acquisitions cosinus et de la valeur minimale des acquisitions cosinus divisée par deux. Le dispositif de contrôle du moteur Co calcule, pour les acquisitions du signal sinus, l'amplitude de la variation des valeurs des acquisitions sinus en soustrayant à la valeur maximale des échantillons sinus la valeur minimale des échantillons sinus. Le dispositif de contrôle du moteur Co calcule, pour les acquisitions du signal cosinus, l'amplitude de la variation des valeurs des acquisitions cosinus en soustrayant à la valeur maximale des échantillons cosinus la valeur minimale des échantillons cosinus.

Le dispositif de contrôle du moteur Co calcule un rapport entre signaux en divisant l'amplitude de la variation des valeurs des acquisitions cosinus par l'amplitude de la variation des valeurs des acquisitions sinus.

A l'étape S44, le dispositif de contrôle du moteur Co commande l'acquisition d'un nombre prédéterminé d'acquisitions du capteur et obtient un angle pour chaque acquisition.

Par exemple, pour un moteur tournant à 2200 tr/mn, le nombre prédéterminé d'acquisitions est de 1000 et les acquisitions sont faites toute les 100 μs, ce qui correspond à au moins deux rotations complètes du rotor.

Dans le cas particulier où le capteur Ca est de type analogique, le dispositif de contrôle du moteur Co, pour chaque échantillon du signal sinus, somme la valeur de l'échantillon du signal sinus au décalage sinus. Le dispositif de contrôle du moteur Co, pour chaque échantillon du signal cosinus, somme la valeur de l'échantillon du signal cosinus au décalage cosinus pour obtenir des échantillons cosinus normalisés.

Le dispositif de contrôle du moteur Co multiplie, pour chaque échantillon du signal sinus sommé avec le décalage sinus, la valeur de l'échantillon du signal sinus sommé avec le décalage sinus par le rapport entre signaux pour obtenir des échantillons sinus normalisés. Pour chaque paire d'échantillon sinus et cosinus normalisés le dispositif de contrôle du moteur Co calcule l'arc tangente pour obtenir des angles normalisés.

Dans le cas particulier ou le capteur Ca est de type numériques, les angles normalisés sont directement délivrés par le capteur Ca.

A l'étape S45, le dispositif de contrôle du moteur Co commande l'arrêt du moteur.

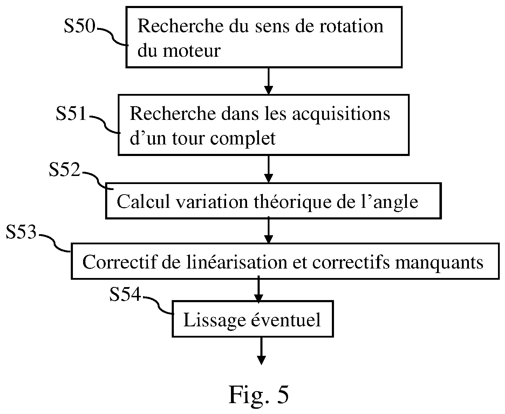

A l'étape S46, le dispositif de contrôle du moteur Co calcule des correctifs de linéarisation à partir des échantillons comme cela sera décrit en référence à la Fig. 5.

La **Fig. 5** illustre schématiquement un procédé de calcul et d'application de corrections à appliquer pour la linéarisation de mesures de champ magnétique de l'aimant disposé à l'extrémité de l'arbre du moteur.

A l'étape S50, le dispositif de contrôle du moteur Co détermine le sens de rotation du rotor. Le sens de la rotation est par exemple déterminé en fonction du sens de variation des angles normalisés.

A l'étape S51, le dispositif de contrôle du moteur Co sélectionne, parmi le nombre prédéterminé d'acquisitions, les angles normalisés correspondant à un tour complet du rotor. Par exemple, les angles normalisés correspondant à un tour complet sont compris entre un premier angle normalisé qui a une différence d'angle de plus de 50° avec le précédent angle normalisé et un angle normalisé qui a une différence d'angle de plus de 50° avec l'angle normalisé précédent. Les angles normalisés sélectionnés sont mémorisés dans une table d'angles normalisés.

Par exemple, les angles normalisés correspondant à un tour complet sont compris entre un premier angle normalisé qui a une différence d'angle de plus de 100° avec le précédent angle normalisé et un angle normalisé qui a une différence d'angle de plus de 100° avec l'angle normalisé précédent. Les angles normalisés sélectionnés sont mémorisés dans une table d'angles normalisés.

Dans l'exemple numérique susmentionné, environ 270 angles normalisés sont sélectionnés et mémorisés dans la table d'angles normalisés.

A l'étape suivante S52, le dispositif de contrôle du moteur Co calcule, pour chaque angle normalisé sélectionné, l'angle théorique correspondant à l'angle normalisé en considérant que le premier angle normalisé sélectionné a un angle théorique de 0° et le dernier angle normalisé sélectionné a un angle de 360°.

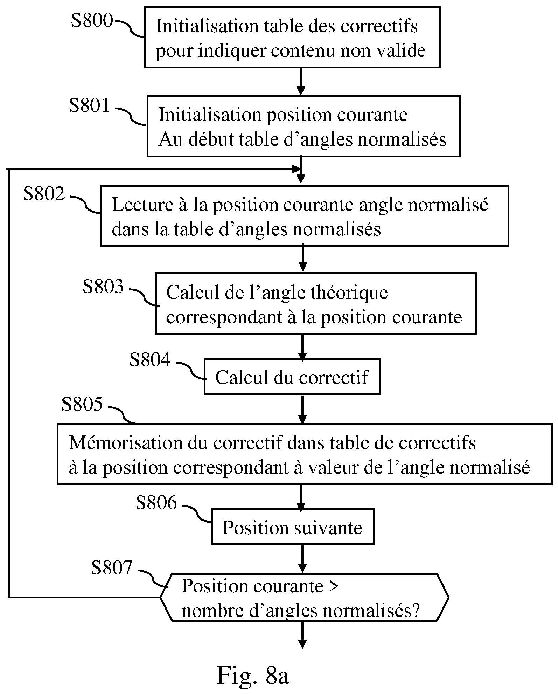

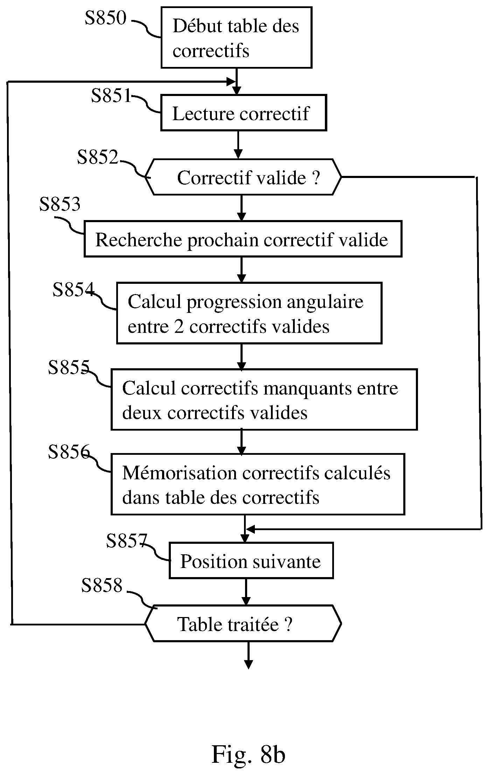

A l'étape suivante S53, le dispositif de contrôle du moteur Co calcule, à partir des angles normalisés sélectionnés et de l'angle théorique des correctifs de linéarisation. Le calcul des correctifs de linéarisation est explicité plus en détail en regard des Figs. 8a et 8b.

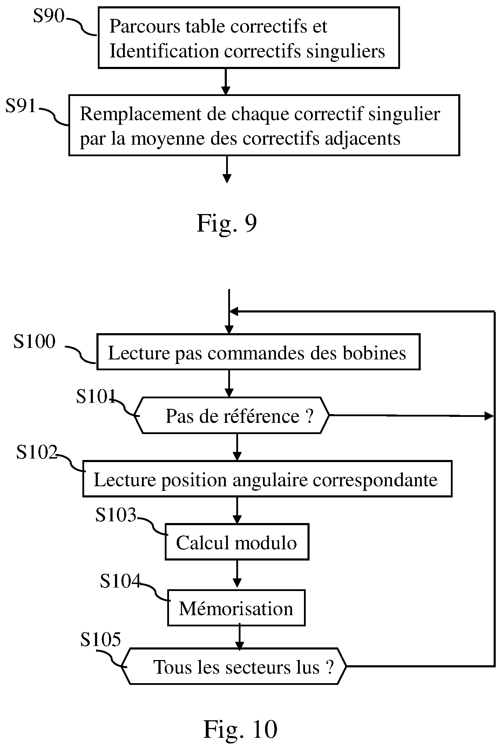

A l'étape S54, le dispositif de contrôle du moteur Co lisse les correctifs calculés dans le cas où un correctif calculé serait en dehors d'une plage de valeur. Le lissage est explicité plus en détail en référence à la Fig. 9.

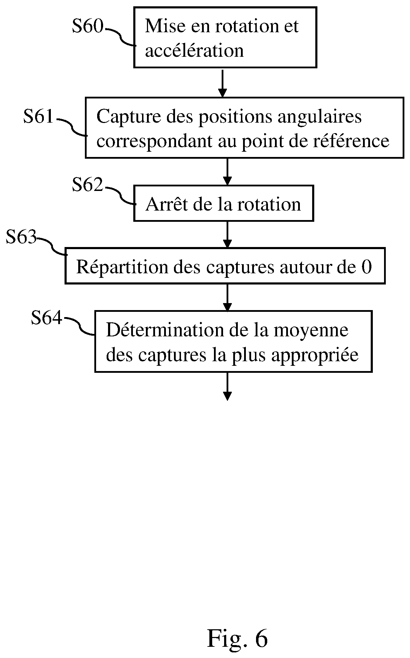

La **Fig. 6** illustre schématiquement un procédé de détermination d'un écart angulaire entre le capteur mesurant le champ magnétique et l'aimant disposé à l'extrémité de l'arbre du moteur.

A l'étape S60, le dispositif de contrôle du moteur Co commande la mise en rotation et en accélération du moteur jusqu'à arriver à une vitesse donnée. La position du rotor n'est pas connue, un champ tournant est néanmoins créé dans le stator sans connaître sa position comme cela a été décrit en référence à l'étape S40 de la Fig. 4.

A l'étape suivante S61, le dispositif de contrôle du moteur Co capture, une position angulaire correspondant au point déterminé d'alimentation de chaque secteur (par exemple, chaque secteur fait 120 degrés dans une configuration de moteur triphasé). La capture de l'angle est décrite plus en détail en référence à la Fig. 10.

A l'étape suivante S62, le dispositif de contrôle du moteur Co commande l'arrêt de la rotation du rotor.

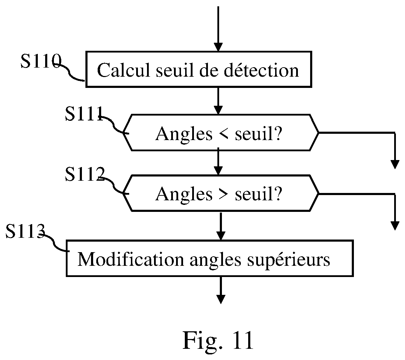

A l'étape suivante S63, le dispositif de contrôle du moteur Co répartit les captures de positions angulaires autour de 0. La répartition des captures de positions angulaires autour de 0 est décrite plus en détail en référence à la Fig. 11.

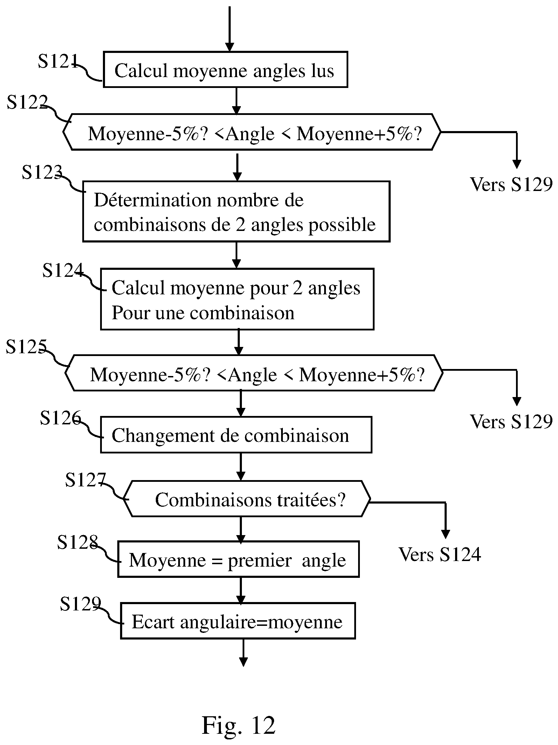

A l'étape suivante S64, le dispositif de contrôle du moteur Co détermine une moyenne de captures de positions angulaires. La détermination d'une moyenne de captures de positions angulaires est décrite plus en détail en référence à la Fig. 12.

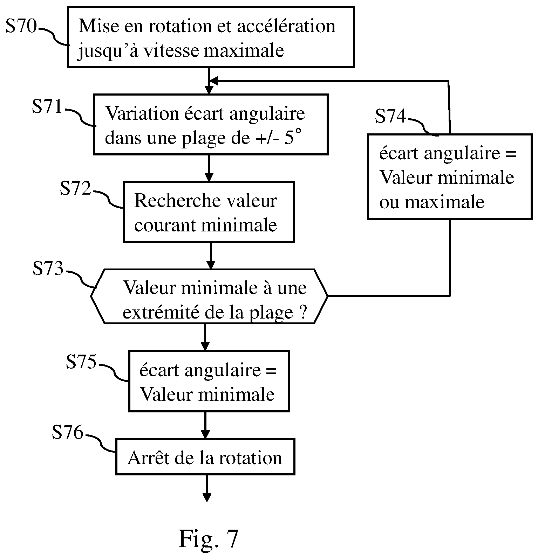

La **Fig. 7** illustre schématiquement un procédé d'ajustement de la valeur de l'écart angulaire entre le capteur mesurant le champ magnétique et l'aimant disposé à l'extrémité de l'arbre du moteur.

A l'étape S70, le dispositif de contrôle du moteur Co commande la mise en rotation et en accélération du moteur jusqu'à arriver à la vitesse maximale du moteur en utilisant la valeur de l'écart angulaire entre le capteur mesurant le champ magnétique et l'aimant disposé à l'extrémité de l'arbre du moteur déterminée à l'étape S129. Cette valeur d'écart angulaire permet ainsi de connaitre la position du rotor et de commander la rotation du rotor de manière classique.

Lors des étapes S71 et S72, le dispositif de contrôle du moteur Co décale la valeur d'écart angulaire de -5° à +5° par pas de 1° et mesure pour chaque décalage la valeur du courant consommé par le moteur pour mémoriser la valeur d'écart angulaire correspondant au courant minimum mesuré.

A l'étape S73, le dispositif de contrôle du moteur Co vérifie si la valeur d'écart angulaire mémorisée est égale à la valeur de l'écart angulaire utilisée à l'étape S70 moins 5% ou est égale à la valeur de l'écart angulaire utilisée à l'étape S70 plus 5%.

Dans l'affirmative, le dispositif de contrôle du moteur Co passe à l'étape S74. Dans la négative, le dispositif de contrôle du moteur Co passe à l'étape S75.

La valeur de l'écart angulaire minimale ou maximale entre le capteur mesurant le champ magnétique et l'aimant disposé à l'extrémité de l'arbre du moteur est mise à l'étape S74 à la valeur d'écart angulaire mémorisée et le dispositif de contrôle du moteur Co retourne à l'étape S71.

A l'étape S75, la valeur de l'écart angulaire entre le capteur mesurant le champ magnétique et l'aimant disposé à l'extrémité de l'arbre du moteur est mise à la valeur d'écart angulaire mémorisée.

A l'étape suivante S76, le dispositif de contrôle du moteur Co commande l'arrêt de la rotation du rotor.

L'algorithme de la Fig. 7 est effectué pour l'autre sens de rotation du moteur en prenant à l'étape S70 la valeur de l'écart angulaire déterminée à l'étape S76.

Les **Figs. 8a et 8b** illustrent schématiquement un procédé de calcul des correctifs de linéarisation selon la présente invention.

A l'étape S800, le dispositif de contrôle du moteur Co initialise une table de correctifs comportant 360 valeurs de correctifs est créée. Chaque valeur de correctif est initialisée à une valeur prédéterminée. Cette valeur prédéterminée correspond à une valeur qui ne peut correspondre à une valeur calculée d'un correctif. La table de correctifs comprend 360 valeurs, une pour chaque degré d'un tour du rotor.

A l'étape suivante S801, le dispositif de contrôle du moteur Co initialise une position courante au début de la table d'angles normalisés.

A l'étape suivante S802, le dispositif de contrôle du moteur Co lit à la position courante la valeur de l'angle normalisé dans la table d'angles normalisés.

A l'étape suivante S803, le dispositif de contrôle du moteur Co calcule la valeur de l'angle théorique correspondant à la position courante. La valeur de l'angle théorique est égale à la variation théorique multipliée par la position courante.

A l'étape suivante S804, le dispositif de contrôle du moteur Co calcule un correctif qui est égal à l'angle théorique calculé à l'étape S803 moins la valeur de l'angle normalisé.

A l'étape suivante S805, le dispositif de contrôle du moteur Co mémorise le correctif calculé dans la table des correctifs à la position correspond à la valeur de l'angle normalisé. A l'étape suivante S806, le dispositif de contrôle du moteur Co passe à la position suivante.

A l'étape S807, le dispositif de contrôle du moteur Co vérifie si la position courante est supérieure au nombre d'angles normalisés.

Dans l'affirmative, le dispositif de contrôle du moteur Co passe à l'étape S850 de l'algorithme de la Fig. 8b. Dans la négative, le dispositif de contrôle du moteur Co retourne à l'étape S802.

A l'étape S850, le dispositif de contrôle du moteur Co positionne un pointeur sur la première position de correctif de la table de correctifs, par exemple la valeur correspondant à un angle de 0 degrés et lit la valeur du correctif à l'étape S851.

A l'étape S852, le dispositif de contrôle du moteur Co vérifie si la valeur du correctif lue est valide en vérifiant si celle-ci est différente de la valeur prédéterminée correspondant. Dans l'affirmative, le dispositif de contrôle du moteur Co passe à l'étape S857. Dans la négative, le dispositif de contrôle du moteur Co passe à l'étape S853.

A l'étape S853, le dispositif de contrôle du moteur Co recherche la prochaine valeur de correctif valide dans la table. Le dispositif de contrôle du moteur Co incrémente la valeur du pointeur à la position suivante, lit la valeur du correctif, vérifie si celle-ci est égale à la valeur prédéterminée et réitère l'incrémentation pointeur et la lecture du correctif tant que la valeur du correctif est égale à la valeur prédéterminée.

A l'étape suivante S854, le dispositif de contrôle du moteur Co calcule la progression angulaire entre les deux dernières valeurs de correctif déterminés comme valides. La progression angulaire correspondant à la différence de positions entre le dernier correctif valide identifié et le précédent correctif valide.

Aux étapes S855 et S856, le dispositif de contrôle du moteur Co remplace les valeurs de correctifs non valides compris entre le dernier correctif valide identifié et le précédent correctif valide en mémorisant pour chaque correctif non valide, une valeur de correctif déterminée à partir d'une progression linéaire entre deux correctifs valides.

A l'étape S857, le dispositif de contrôle du moteur Co incrémente la valeur du pointeur.

A l'étape S858, le dispositif de contrôle du moteur Co vérifie si la totalité de la table de correctifs a été traitée.

Dans l'affirmative, le dispositif de contrôle du moteur Co interrompt l'algorithme de la Fig. 5 pour retourner à l'étape S54.

Dans la négative, le dispositif de contrôle du moteur Co retourne à l'étape S851.

La **Fig. 9** illustre schématiquement un procédé de lissage de correctifs de linéarisation selon la présente invention.

A l'étape S90, le dispositif de contrôle du moteur Co parcourt la table de correctifs et identifie des correctifs singuliers.

Un point singulier est une valeur de correctif qui est différente de +/- 5° avec chaque valeur de correctif adjacent.

A l'étape S91, le dispositif de contrôle du moteur Co remplace chaque valeur de correctif singulier par la moyenne des deux valeurs de correctifs adjacents au correctif singulier. La **Fig. 10** illustre schématiquement un procédé de capture de la valeur d'une position angulaire correspondant au point déterminé d'alimentation de chaque secteur.

Par exemple, dans le cas d'un moteur triphasé, les bobines du stator sont pilotées selon une séquence constituée de six combinaisons. Pour réaliser un tour du rotor, la séquence peut être répétée plusieurs fois en fonction du nombre de pôles du rotor, chaque séquence permettant d'effectuer une partie, appelée secteur, d'un tour complet du rotor.

Une combinaison de la séquence est fixée arbitrairement comme combinaison correspondant à la position angulaire 0 de référence.

Pour un tour complet du rotor, la combinaison de référence est ainsi reproduite autant de fois qu'il y a de secteurs.

A l'étape S100, le dispositif de contrôle du moteur Co obtient la combinaison appliquée sur les bobines du stator.

A l'étape suivante S101, le dispositif de contrôle du moteur Co vérifie si la combinaison appliquée est la combinaison de référence.

Dans l'affirmative, le dispositif de contrôle du moteur Co passe à l'étape S102. Dans la négative, le dispositif de contrôle du moteur Co retourne à l'étape S100.

A l'étape S102, le dispositif de contrôle du moteur Co obtient la position angulaire à partir du capteur Ca.

A l'étape suivante S103, le dispositif de contrôle du moteur Co effectue sur la position angulaire obtenue une opération modulo le nombre de degrés couverts par un secteur, par exemple 120° dans le cas de trois secteurs.

A l'étape S104, le dispositif de contrôle du moteur Co mémorise la position angulaire obtenue après l'opération modulo le nombre de degrés couverts par un secteur.

A l'étape S105, le dispositif de contrôle du moteur Co vérifie si une position angulaire a été obtenue pour chaque secteur. Dans l'affirmative, le dispositif de contrôle du moteur Co passe à l'étape S62. Dans la négative, le dispositif de contrôle du moteur Co retourne à l'étape S100.

La **Fig. 11** illustre schématiquement un procédé de répartition de captures de positions angulaire autour de 0.

A l'étape S110, le dispositif de contrôle du moteur Co obtient un seuil de décision qui est par exemple égal à la valeur médiane de la plage d'angles couverte par un secteur. Par exemple, dans le cas d'un moteur triphasé, le seuil de décision est égal à 60°.

A l'étape S111, le dispositif de contrôle du moteur Co vérifie si toutes les positions angulaires mémorisées à l'étape S104 sont inférieures au seuil de décision. Dans l'affirmative, le dispositif de contrôle du moteur Co passe à l'étape S64. Dans la négative, le dispositif de contrôle du moteur Co passe à l'étape S112.

A l'étape S112, le dispositif de contrôle du moteur Co vérifie si toutes les positions angulaires mémorisées à l'étape S104 sont supérieures au seuil de décision. Dans l'affirmative, le dispositif de contrôle du moteur Co passe à l'étape S64. Dans la négative, le dispositif de contrôle du moteur Co passe à l'étape S113.

A l'étape S113, le dispositif de contrôle du moteur Co modifie la valeur de chaque position angulaire mémorisée à l'étape S104 en soustrayant à celle-ci la valeur de la plage d'angles couverte par un secteur. Cette opération effectuée, le dispositif de contrôle du moteur Co mémorise chaque valeur de position angulaire modifiée à la place de la position angulaire et passe à l'étape S64.

La Fig. 12 illustre schématiquement un procédé de détermination d'une moyenne de captures de position angulaire.

A l'étape S121, le dispositif de contrôle du moteur Co calcule la moyenne des positions angulaires mémorisées.

A l'étape S122, le dispositif de contrôle du moteur Co vérifie si la valeur d'au moins une position angulaire mémorisée est inférieure à 95% de la valeur moyenne des positions angulaires calculée à l'étape S121 ou est supérieure à 105% de la valeur moyenne des position angulaires calculée à l'étape S121.

Dans l'affirmative, le dispositif de contrôle du moteur Co passe à l'étape S123. Dans la négative, le dispositif de contrôle du moteur Co passe à l'étape S129.

A l'étape S123, le dispositif de contrôle du moteur Co obtient le nombre de combinaisons de positions angulaires mémorisées moins une position angulaire qui sont possibles parmi le nombre de positions angulaires mémorisés. Par exemple, dans le cas de trois secteurs, le dispositif de contrôle du moteur Co obtient le nombre de combinaisons de deux positions angulaires mémorisées qui sont possibles parmi trois positions angulaires mémorisées.

A l'étape suivante S124, le dispositif de contrôle du moteur Co calcule la moyenne des positions angulaires d'une combinaison de positions angulaires.

A l'étape S125, le dispositif de contrôle du moteur Co vérifie si la valeur d'au moins une position angulaire de la combinaison est inférieure à 95% de la valeur moyenne de positions angulaires calculée à l'étape S124 ou est supérieure à 105% de la valeur moyenne de positions angulaires calculée à l'étape S124.

Dans l'affirmative, le dispositif de contrôle du moteur Co passe à l'étape S126. Dans la négative, le dispositif de contrôle du moteur Co passe à l'étape S129.

A l'étape S126, le dispositif de contrôle du moteur Co sélectionne une nouvelle combinaison de positions angulaires.

A l'étape S127, le dispositif de contrôle du moteur Co vérifie si toutes les combinaisons de positions angulaires ont été traitées.

Dans l'affirmative, le dispositif de contrôle du moteur Co passe à l'étape S128. Dans la négative, le dispositif de contrôle du moteur Co retourne à l'étape 124.

A l'étape S128, le dispositif de contrôle du moteur Co met la valeur du premier angle obtenue à l'étape S102 égale à la dernière moyenne calculée à l'étape S124.

A l'étape S128, le dispositif de contrôle du moteur Co met la valeur de l'écart angulaire égale à la moyenne obtenue à l'étape S120 ou égale à la moyenne obtenue à l'étape S124 si la vérification à l'étape S122 s'est avérée négative.

Dans le cas où la moyenne est négative, le dispositif de contrôle du moteur Co met la valeur de l'écart angulaire égale à la moyenne plus la valeur de la plage d'angles couverte par un secteur.

## Revendications

1. Procédé de correction de mesures effectuées par un capteur (Ca) d'un champ magnétique d'un aimant (Ai) disposé sur un arbre (Ar) d'un moteur (Mo) pour le contrôle du moteur, le moteur (Mo) étant un moteur à courant continu sans balais comprenant un rotor (Ro) et un stator, le capteur (Ca) de champ magnétique permettant l'obtention de valeurs d'angles pendant la rotation du moteur, un tour stator étant divisé en secteurs, chaque secteur comprenant plusieurs combinaisons de commandes de bobines du stator, chaque commande correspondant à une plage angulaire définie, **caractérisé en ce que** le procédé comporte les étapes, exécutées par un contrôleur (Co) du moteur de :

   - mise en rotation (S40) du rotor en créant un champ tournant dans le stator sans connaître la position du rotor,
   - obtention (S44) de valeurs d'angles dits normalisés à partir du capteur de champ magnétique, les valeurs d'angles normalisés étant obtenues pendant un tour complet du rotor,
   - calcul (S46) de correctifs de linéarisation des angles normalisés obtenus,
   - obtention, pour chaque secteur, d'une position angulaire du rotor pour une combinaison donnée du secteur,
   - détermination d'une moyenne angulaire à partir des positions angulaires obtenues pour obtenir un écart angulaire entre le capteur de champ magnétique et l'aimant disposé sur ledit arbre moteur,
   - mise en rotation du rotor en utilisant l'écart angulaire entre le capteur de champ magnétique et l'aimant disposé sur ledit arbre moteur,
   - variation de l'écart angulaire et mesure, pour chaque variation, du courant consommé par le moteur,
   - sélection de la variation qui correspond au courant minimum consommé par le moteur comme la valeur de l'écart angulaire.

2. Procédé selon la revendication 1, **caractérisé en ce que** si le capteur est un capteur de champ magnétique analogique, les angles normalisés sont calculés à partir d'acquisitions d'un signal sinus et d'un signal cosinus, les acquisitions des signaux sinus et cosinus étant modifiées pour que les valeurs moyennes des acquisitions des signaux sinus et cosinus sont nulles et que l'amplitude de la variation des valeurs des acquisitions des signaux sinus et cosinus sont identiques.

3. Procédé selon la revendication 1 ou 2, **caractérisé en ce que** des valeurs d'angles normalisés sont obtenues pendant plus d'un tour complet du moteur et **en ce que** le procédé comporte entre outre l'étape de :

   - sélection parmi les angles normalisés obtenus, des angles normalisés pendant un tour complet, la sélection des angles normalisé étant effectuée en sélectionnant les angles normalisés compris entre un premier angle normalisé qui a une différence d'angle au moins supérieure à 50° avec le précédent angle normalisé et un angle normalisé qui a une différence d'angle de plus de 50° avec l'angle normalisé précédent, les angles normalisés sélectionnés étant mémorisés dans une table d'angles normalisés.

4. Procédé selon l'une quelconque des revendications 1 à 3, **caractérisé en ce que** le nombre d'angles normalisés sélectionnés est inférieur à 360 et **en ce que** le procédé comporte en outre les étapes :

   - calcul, pour chaque angle normalisé sélectionné, d'un angle théorique correspondant à l'angle normalisé en considérant que le premier angle normalisé sélectionné a un angle théorique de 0° et le dernier angle normalisé sélectionné a un angle de 360°.

- initialisation d'une table de correctifs comportant une valeur de correctif pour chaque degré d'un tour du moteur, chaque valeur de correctif étant initialisée à une valeur prédéterminée qui correspond à une valeur qui ne peut correspondre à une valeur calculée d'un correctif,

- calcul, pour chaque angle normalisé sélectionné, d'un correctif qui est égal à l'angle théorique calculé pour l'angle normalisé sélectionné moins la valeur de l'angle normalisé,

- mémorisation du correctif calculé dans la table des correctifs à la position qui correspond à la valeur de l'angle normalisé sélectionné,

- parcours de la table des correctifs pour identifier chaque correctif dont la valeur est différente de la valeur prédéterminée,

- mémorisation d'une valeur de correctif pour chaque correctif dont la valeur est égale à la valeur prédéterminée, la valeur de correctif mémorisée étant déterminée à partir d'une progression linéaire entre deux correctifs dont la valeur est différente de la valeur prédéterminée.

**5.** Procédé selon la revendication 4, **caractérisé en ce que** le procédé comporte en outre les étapes de :

- identification de correctifs singuliers dans la table de correctifs, un point singulier ayant une valeur de correctif qui est différente de +/- 5° avec chaque valeur de correctif adjacent,

- remplacement de chaque valeur de correctif singulier par une moyenne des deux valeurs de correctifs adjacents au correctif singulier.

**6.** Procédé selon l'une quelconque des revendications 1 à 5, **caractérisé en ce que**
la moyenne angulaire est déterminée à partir des positions angulaires obtenues en répartissant les positions angulaires autour de 0.

**7.** Procédé selon la revendication 6, **caractérisé en ce que** la répartition des positions angulaires autour de 0 est effectuée en vérifiant si une position angulaire est supérieure à un seuil de décision et les autres positions angulaires sont inférieures au seuil de décision ou si une position angulaire est inférieure au seuil de décision et les autres positions angulaires sont supérieures au seuil de décision, et dans l'affirmative, en modifiant la valeur de chaque position angulaire en soustrayant la valeur de la plage d'angles couverte par un secteur à la valeur de la position angulaire.

**8.** Procédé selon l'une quelconque des revendications 6 à 7, **caractérisé en ce que** la moyenne angulaire est en outre déterminée en :

- calculant la moyenne des positions angulaires,

- vérifiant si une des positions angulaires n'est pas comprise dans une plage de valeur autour de la moyenne et dans l'affirmative en calculant la moyenne des positions angulaires qui sont comprises dans une plage de valeur autour de la moyenne.

**9.** Procédé selon l'une quelconque des revendications 1 à 8, **caractérisé en ce que** la mise en rotation du rotor en utilisant l'écart angulaire entre le capteur de champ magnétique et l'aimant disposé sur ledit arbre moteur pour connaître la position du rotor, la variation de l'écart angulaire et la mesure, pour chaque variation, du courant consommé par le moteur, et la sélection de la variation qui correspond au courant minimum consommé par le moteur comme la valeur de l'écart angulaire sont effectuées pour chaque sens de rotation du moteur.

**10.** Dispositif de correction de mesures effectuées par un capteur (Ca) d'un champ magnétique d'un aimant (Ai) disposé sur un arbre (Ar) d'un moteur (Mo) pour le contrôle du moteur, le moteur étant un moteur à courant continu sans balais comprenant un rotor (Ro) et un stator, le capteur de champ magnétique permettant l'obtention de valeurs d'angles pendant la rotation du moteur, un tour stator étant divisé en secteurs, chaque secteur comprenant plusieurs combinaisons de commandes de bobines du stator, chaque commande correspondant à une plage angulaire définie, **caractérisé en ce que** le dispositif est prévu pour être compris dans un contrôleur (Co) du moteur et comporte :

- des moyens de mise en rotation du rotor en créant un champ tournant dans le stator sans connaître la position du rotor,

- des moyens d'obtention de valeurs d'angles dits normalisés à partir du capteur de champ magnétique, les valeurs d'angles normalisés étant obtenues pendant un tour complet du rotor,

- des moyens de calcul de correctifs de linéarisation des angles normalisés obtenus,

- des moyens d'obtention, pour chaque secteur, d'une position angulaire du rotor pour une combinaison donnée du secteur,

- des moyens de détermination d'une moyenne angulaire à partir des positions angulaires obtenues pour obtenir un écart angulaire entre le capteur de champ magnétique et l'aimant disposé sur ledit arbre moteur,

- des moyens de mise en rotation du rotor en utilisant l'écart angulaire entre le capteur de champ magnétique et l'aimant disposé sur ledit arbre moteur,

- des moyens de variation de l'écart angulaire et mesure, pour chaque variation, du courant consommé par le moteur,

- des moyens de sélection de la variation qui correspond au courant minimum consommé par le moteur comme la valeur de l'écart angulaire.

**Patentansprüche**

1. Verfahren zur Korrektur von Messungen, die von einem Sensor (Ca) eines Magnetfelds eines Magneten (Ai) durchgeführt werden, der auf einer Welle (Ar) eines Motors (Mo) angeordnet ist, zur Steuerung des Motors, wobei der Motor (Mo) ein bürstenloser Gleichstrommotor mit einem Rotor (Ro) und einem Stator ist, wobei der Magnetfeldsensor (Ca) den Erhalt von Winkelwerten während der Drehung des Motors ermöglicht, wobei eine Statorumdrehung in Sektoren aufgeteilt ist, wobei jeder Sektor mehrere Kombinationen von Statorspulenansteuerungen umfasst, wobei jede Ansteuerung einem festgelegten Winkelbereich entspricht, **dadurch gekennzeichnet, dass** das Verfahren die folgenden Schritte umfasst, die von einer Steuerung (Co) des Motors ausgeführt werden:

- Indrehungversetzen (S40) des Rotors durch Erzeugung eines Drehfelds im Stator, ohne die Position des Rotors zu kennen,
- Erhalten (S44) von Werten normierter Winkel anhand des Magnetfeldsensors, wobei die Werte normierter Winkel während einer vollständigen Umdrehung des Rotors erhalten werden,
- Berechnen (S46) von Linearisierungskorrekturen der erhaltenen normierten Winkel,
- Erhalten, für jeden Sektor, einer Winkelposition des Rotors für eine bestimmte Kombination des Sektors,
- Bestimmen eines Winkeldurchschnitts anhand der erhaltenen Winkelpositionen, um einen Winkelabstand zwischen dem Magnetfeldsensor und dem Magneten, der auf der Motorwelle angeordnet ist, zu erhalten,
- Indrehungversetzen des Rotors unter Verwendung des Winkelabstands zwischen dem Magnetfeldsensor und dem Magneten, der auf der Motorwelle angeordnet ist,
- Variieren des Winkelabstands und Messen des Stroms, der von dem Motor verbraucht wird, für jede Variation,
- Auswählen der Variation, dem Mindeststrom entspricht, der von dem Motor verbraucht wird, als der Wert des Winkelabstands.

2. Verfahren nach Anspruch 1, **dadurch gekennzeichnet, dass**, wenn der Sensor ein analoger Magnetfeldsensor ist, die normierten Winkel anhand von Erfassungen eines Sinussignals und eines Cosinussignals berechnet werden, wobei die Erfassungen des Sinusund des Cosinussignals verändert werden, damit die Mittelwerte der Erfassungen des Sinusund des Cosinussignals null sind und die Amplitude der Variation der Werte der Erfassungen des Sinus- und des Cosinussignals identisch sind.

3. Verfahren nach Anspruch 1 oder 2, **dadurch gekennzeichnet, dass** die Werte normierter Winkel während mehr als einer vollständigen Umdrehung des Motors erhalten werden, und dadurch, dass das Verfahren ferner den folgenden Schritt beinhaltet

- Auswählen, aus den erhaltenen normierten Winkeln, der normierten Winkel während einer vollständigen Umdrehung, wobei die Auswahl der normierten Winkel durch Auswahl der normierten Winkel erfolgt, die zwischen einem ersten normierten Winkel, der eine Winkeldifferenz, die wenigstens größer als 50° ist, zum vorhergehenden normierten Winkel aufweist, und einem normierten Winkel, der eine Winkeldifferenz von mehr als 50° zum vorhergehenden normierten Winkel aufweist, liegt, wobei die ausgewählten normierten Winkel in einer Tabelle normierter Winkel gespeichert werden.

4. Verfahren nach einem der Ansprüche 1 bis 3, **dadurch gekennzeichnet, dass** die Anzahl ausgewählter normierter Winkel kleiner als 360 ist, und dadurch, dass das Verfahren ferner die folgenden Schritte beinhaltet:

- Berechnen, für jeden ausgewählten normierten Winkel, eines theoretischen Winkels, der dem normierten Winkel entspricht, unter Berücksichtigung, dass der erste ausgewählte normalisierte Winkel einen theoretischen Winkel von 0° aufweist und der letzte auswählte normierte Winkel einen Winkel von 360° aufweist,
- Initialisieren einer Korrekturentabelle, die einen Korrekturwert für jedes Grad einer Umdrehung des Motors beinhaltet, wobei jeder Korrekturwert auf einen vorbestimmten Wert initialisiert wird, einem Wert entspricht, der einem berechneten Wert einer Korrektur nicht entsprechen kann,
- Berechnen, für jeden ausgewählten normierten Winkel, einer Korrektur, die gleich dem theoretischen Winkel ist, der für den ausgewählten normierten Winkel berechnet wurde, minus den Wert des normierten Winkels,
- Speichern der berechneten Korrektur in der Tabelle der Korrekturen an der Position, dem Wert des ausgewählten normierten Winkels entspricht,
- Durchlaufen der Tabelle der Korrekturen, um jede Korrektur zu ermitteln, deren Wert sich von dem vorbestimmten Wert unterscheidet,
- Speichern eines Korrekturwerts für jede Korrektur, deren Wert gleich dem vorbestimmten Wert ist, wobei der gespeicherte Korrekturwert anhand einer linearen Progression zwischen zwei Korrekturen bestimmt wird, deren Wert sich von dem vorbestimmten Wert unterscheidet.

5. Verfahren nach Anspruch 4, **dadurch gekennzeichnet, dass** das Verfahren ferner die folgenden Schritte beinhaltet:

   - Ermitteln singulärer Korrektur in der Korrekturentabelle, wobei ein singulärer Punkt einen Korrekturwert aufweist, der sich um +/- 5o von jedem benachbarten Korrekturwert unterscheidet,
   - Ersetzen jedes singulären Korrekturwerts durch einen Durchschnitt der zwei Korrekturwerte, die der singulären Korrektur benachbart sind.

6. Verfahren nach einem der Ansprüche 1 bis 5, **dadurch gekennzeichnet, dass**
   der Winkeldurchschnitt anhand der Winkelpositionen bestimmt wird, die durch Verteilung der Winkelpositionen um 0 herum erhalten werden.

7. Verfahren nach Anspruch 6, **dadurch gekennzeichnet, dass** die Verteilung der Winkelpositionen um 0 herum durchgeführt wird, wenn indem überprüft wird, ob eine Winkelposition größer als eine Entscheidungsschwelle ist und die anderen Winkelpositionen kleiner als die Entscheidungsschwelle sind, oder ob eine Winkelposition kleiner als die Entscheidungsschwelle ist und die anderen Winkelpositionen größer als die Entscheidungsschwelle sind, und wenn ja, indem der Wert jeder Winkelposition verändert wird, indem der Wert des Winkelbereichs, der von einem Sektor abgedeckt wird, vom Wert der Winkelposition subtrahiert wird.

8. Verfahren nach einem der Ansprüche 6 bis 7, **dadurch gekennzeichnet, dass** der Winkeldurchschnitt ferner bestimmt wird, indem:

   - der Durchschnitt der Winkelpositionen berechnet wird,
   - überprüft wird, ob eine der Winkelpositionen nicht in einem Wertebereich um den Durchschnitt herum enthalten ist, und wenn ja, indem der Durchschnitt der Winkelpositionen berechnet wird, die in einem Wertebereich um den Durchschnitt herum enthalten sind.

9. Verfahren nach einem der Ansprüche 1 bis 8, **dadurch gekennzeichnet, dass** das Indrehungversetzen des Rotors unter Verwendung des Winkelabstands zwischen dem Magnetfeldsensor und dem Magneten, der auf der Motorwelle angeordnet ist, um die Position des Rotors herauszufinden, das Variieren des Winkelabstands und das Messen des Stroms, der vom Motor verbraucht wird, für jede Variation, das Auswählen der Variation, dem Mindeststrom entspricht, der von dem Motor verbraucht wird, als der Wert des Winkelabstands, für jede Drehrichtung des Motors durchgeführt werden.

10. Vorrichtung zur Korrektur von Messungen, die von einem Sensor (Ca) eines Magnetfelds eines Magneten (Ai) durchgeführt werden, der auf einer Welle (Ar) eines Motors (Mo) angeordnet ist, zur Steuerung des Motors, wobei der Motor ein bürstenloser Gleichstrommotor mit einem Rotor (Ro) und einem Stator ist, wobei der Magnetfeldsensor den Erhalt von Winkelwerten während der Drehung des Motors ermöglicht, wobei eine Statorumdrehung in Sektoren aufgeteilt ist, wobei jeder Sektor mehrere Kombinationen von Statorspulenansteuerungen umfasst, wobei jede Ansteuerung einem festgelegten Winkelbereich entspricht, **dadurch gekennzeichnet, dass** die Vorrichtung dafür vorgesehen ist, in einer Steuerung (Co) des Motors enthalten zu sein und Folgendes beinhaltet:

    - Mittel zum Indrehungversetzen des Rotors durch Erzeugung eines Drehfelds im Stator, ohne die Position des Rotors zu kennen,
    - Mittel zum Erhalten von Werten normierter Winkel anhand des Magnetfeldsensors, wobei die Werte normierter Winkel während einer vollständigen Umdrehung des Rotors erhalten werden,
    - Mittel zum Berechnen von Linearisierungskorrekturen der erhaltenen normierten Winkel,
    - Mittel zum Erhalten, für jeden Sektor, einer Winkelposition des Rotors für eine bestimmte Kombination des Sektors,
    - Mittel zum Bestimmen eines Winkeldurchschnitts anhand der erhaltenen Winkelpositionen, um einen Winkelabstand zwischen dem Magnetfeldsensor und dem Magneten, der auf der Motorwelle angeordnet ist, zu erhalten,
    - Mittel zum Indrehungversetzen des Rotors unter Verwendung des Winkelabstands zwischen dem Magnetfeldsensor und dem Magneten, der auf der Motorwelle angeordnet ist,
    - Mittel zum Variieren des Winkelabstands und Messen des Stroms, der von dem Motor verbraucht wird, für jede Variation,
    - Mittel zum Auswählen der Variation, dem Mindeststrom entspricht, der von dem Motor verbraucht wird, als der Wert des Winkelabstands.

## Claims

1. Method for correcting measurements made by a sensor (Ca) of a magnetic field of a magnet (Ai) disposed on a shaft (Ar) of a motor (Mo) for controlling the motor, the motor (Mo) being a brushless DC motor comprising a rotor (Ro) and a stator, the magnetic-field sensor (Ca) making it possible to obtain values of angles during the rotation of the motor, a stator turn being divided into sectors, each sector comprising a plurality of combinations of stator coil commands, each command corresponding to a defined angular range, **characterised in that** the method comprises the steps, performed by a controller (Co) of the motor, of:

   - setting the rotor in rotation (S40) by creating a rotating field in the stator without knowing the position of the rotor,
   - obtaining (S44) values of so-called standardised angles from the magnetic-field sensor, the values of standardised angles being obtained during a complete turn of the rotor,
   - calculating (S46) linearisation corrections of the standardised angles obtained,
   - obtaining, for each sector, an angular position of the rotor for a given combination of the sector,
   - determining an angular mean from the angular positions obtained to obtain an angular difference between the magnetic-field sensor and the magnet disposed on said motor shaft,
   - setting the rotor in rotation using the angular difference between the magnetic-field sensor and the magnet disposed on said motor shaft,
   - varying the angular difference and, for each variation, measuring the current consumed by the motor,
   - selecting the variation that corresponds to the minimum current consumed by the motor as the value of the angular difference.

2. Method according to claim 1, characterised that, if the sensor is an analogue magnetic-field sensor, the standardised angles are calculated from acquisitions of a sine signal and of a cosine signal, the acquisitions of the sign and cosine signals being modified so that the mean values of the acquisitions of the sine and cosine signals are zero and so that the amplitude of the variation of the values of the acquisitions of the sine and cosine signals are identical.

3. Method according to claim 1 or 2, **characterised in that** the values of standardised angles are obtained during more than one complete turn of the motor and **in that** the method comprises, among other things, the step of:

   - selecting, among the standardised angles obtained, standardised angles during a complete turn, the selection of the standardised angles being made by selecting the standardised angles included between a first standardised angle that has a difference in angle at least greater than 50° from the previous standardised angle and a standardised angle that has a difference in angle of more than 50° from the previous standardised angle, the standardised angles selected being stored in a table of standardised angles.

4. Method according to any one of claims 1 to 3, **characterised in that** the number of standardised angles selected is less than 360 and **in that** the method furthermore comprises the steps:

   - calculating, for each standardised angle selected, a theoretical angle corresponding to the standardised angle by considering that the first standardised angle selected has a theoretical angle of 0° and the last standardised angle selected has an angle of 360°,
   - initialising a table of corrections comprising a correction value for each degree of a turn of the motor, each correction value being initialised at a predetermined value that corresponds to a value that cannot correspond to a calculating value of a correction,
   - calculating, for each standardised angle selected, a correction that is equal to the theoretical angle calculated for the standardised angle selected minus the value of the standardised angle,
   - storing the calculated correction in the table of corrections at the position that corresponds to the value of the standardised angle selected,
   - running through the table of corrections to identify each correction the value of which is different from the predetermined value,
   - storing a correction value for each correction the value of which is equal to the predetermined value, the correction value stored being determined from a linear progression between two corrections the value of which is different from the predetermined value.

5. Method according to claim 4, **characterised in that** the method furthermore comprises the steps of:

   - identifying singular corrections in the table of corrections, a singular point having a correction value that is different by +/- 5° from each adjacent correction value,

- replacing each singular correction value with a mean of the two correction values adjacent to the singular correction.

6. Method according to any one of claims 1 to 5, **characterised in that** the angular mean is determined from the angular positions obtained by distributing the angular positions around 0.

7. Method according to claim 6, **characterised in that** the distribution of the angular positions around 0 is done by checking whether an angular position is above a decision threshold and the other angular positions are below the decision threshold or whether an angular position is below the decision threshold and the other angular positions are above the decision threshold and, in the affirmative, modifying the value of each angular position by subtracting the value of the range of angles covered by a sector from the value of the angular position.

8. Method according to either one of claims 6 to 7, **characterised in that** the angular mean is furthermore determined by:

   - calculating the mean of the angular positions,
   - checking whether one of the angular positions is not included in a range of values around the mean and, in the affirmative, calculating the mean of the angular positions that are included in a range of values around the mean.

9. Method according to any one of claims 1 to 8, **characterised in that** the setting in rotation of the rotor using the angular difference between the magnetic-field sensor and the magnet disposed on said motor shaft for knowing the position of the rotor, the variation in the angular difference and the measurement, for each variation, of the current consumed by the motor, the selection of the variation that corresponds to the minimum current consumed by the motor as the value of the angular difference are implemented for each direction of rotation of the motor.

10. Device for correcting measurements made by a sensor (Ca) of a magnetic field of a magnet (Ai) disposed on a shaft (Ar) of a motor (Mo) for controlling the motor, the motor being a brushless DC motor comprising a rotor (Ro) and a stator, the magnetic-field sensor making it possible to obtain values of angles during the rotation of the motor, a stator turn being divided into sectors, each sector comprising a plurality of combinations of stator coil commands, each command corresponding to a defined angular range, **characterised in that** the device is designed to be included in a controller (Co) of the motor and comprises:

- means for setting the rotor in rotation by creating a rotating field in the stator without knowing the position of the rotor,
- means for obtaining values of so-called standardised angles from the magnetic-field sensor, the values of standardised angles being obtained during a complete turn of the rotor,
- means for calculating linearisation corrections of the standardised angles obtained,
- means for obtaining, for each sector, an angular position of the rotor for a given combination of the sector,
- means for determining an angular mean from the angular positions obtained to obtain an angular difference between the magnetic-field sensor and the magnet disposed on said motor shaft,
- means for setting the rotor in rotation using the angular difference between the magnetic-field sensor and the magnet disposed on said motor shaft,
- means for varying the angular difference and, for each variation, measuring the current consumed by the motor,
- means for selecting the variation that corresponds to the minimum current consumed by the motor as the value of the angular difference.

Mo

Ai

Ar

Co

Ca

Ce

Ro

**Fig. 1**

An

Sin

Cos

**Fig. 2**

Fig. 3

S40 — Mise en rotation et accélération

S41 — Capteur analogique ?

S42 — Acquisition valeurs min et max sur deux axes

S43 — Calcul des coefficients de normalisation

S44 — Réalisation d'acquisitions du capteur et calcul de l'angle

S45 — Arrêt de la rotation

S46 — Calcul correctifs de linéarisation

Fig. 4

S50 — Recherche du sens de rotation du moteur

S51 — Recherche dans les acquisitions d'un tour complet

S52 — Calcul variation théorique de l'angle

S53 — Correctif de linéarisation et correctifs manquants

S54 — Lissage éventuel

Fig. 5

S60 — Mise en rotation et accélération

S61 — Capture des positions angulaires correspondant au point de référence

S62 — Arrêt de la rotation

S63 — Répartition des captures autour de 0

S64 — Détermination de la moyenne des captures la plus appropriée

Fig. 6

S70 — Mise en rotation et accélération jusqu'à vitesse maximale

S71 — Variation écart angulaire dans une plage de +/- 5°

S74 — écart angulaire = Valeur minimale ou maximale

S72 — Recherche valeur courant minimale

S73 — Valeur minimale à une extrémité de la plage ?

S75 — écart angulaire = Valeur minimale

S76 — Arrêt de la rotation

Fig. 7

S800 — Initialisation table des correctifs
pour indiquer contenu non valide

S801 — Initialisation position courante
Au début table d'angles normalisés

S802 — Lecture à la position courante angle normalisé
dans la table d'angles normalisés

S803 — Calcul de l'angle théorique
correspondant à la position courante

S804 — Calcul du correctif

S805 — Mémorisation du correctif dans table de correctifs
à la position correspondant à valeur de l'angle normalisé

S806 — Position suivante

S807 — Position courante >
nombre d'angles normalisés?

Fig. 8a

S850 — Début table des correctifs

S851 — Lecture correctif

S852 — Correctif valide ?

S853 — Recherche prochain correctif valide

S854 — Calcul progression angulaire entre 2 correctifs valides

S855 — Calcul correctifs manquants entre deux correctifs valides

S856 — Mémorisation correctifs calculés dans table des correctifs

S857 — Position suivante

S858 — Table traitée ?

Fig. 8b

S90 — Parcours table correctifs et
Identification correctifs singuliers

S91 — Remplacement de chaque correctif singulier
par la moyenne des correctifs adjacents

Fig. 9

S100 — Lecture pas commandes des bobines

S101 — Pas de référence ?

S102 — Lecture position angulaire correspondante

S103 — Calcul modulo

S104 — Mémorisation

S105 — Tous les secteurs lus ?

Fig. 10

S110 — Calcul seuil de détection

S111 — Angles < seuil?

S112 — Angles > seuil?

S113 — Modification angles supérieurs

Fig. 11

S121 — Calcul moyenne angles lus

S122 — Moyenne-5%? <Angle < Moyenne+5%? → Vers S129

S123 — Détermination nombre de combinaisons de 2 angles possible

S124 — Calcul moyenne pour 2 angles Pour une combinaison

S125 — Moyenne-5%? <Angle < Moyenne+5%? → Vers S129

S126 — Changement de combinaison

S127 — Combinaisons traitées? → Vers S124

S128 — Moyenne = premier angle

S129 — Ecart angulaire=moyenne

Fig. 12